# EUROPEAN PATENT SPECIFICATION

(11) **EP 2 903 356 B1**
(45) Date of publication and mention of the grant of the patent: **28.02.2018**
(21) Application number: 15153819.6
(22) Date of filing: 12.06.2012
(51) Int. Cl.: H04W 52/28, H04W 52/14, H04W 52/34, H04W 56/00, H04L 5/00, H04L 25/03

(54) **Network node and method therein**
Netzwerkknoten und Verfahren darin
Noeud de réseau et procédés associés

(30) Priority: 29.01.2012 US 201261591940 P
(43) Date of publication of application: 05.08.2015
(62) Divisional of application: 12730060.6
(73) Proprietor: Telefonaktiebolaget LM Ericsson (publ), 164 83 Stockholm (SE)
(72) Inventor: Baldemair, Robert, SE-17069 SOLNA (SE); Larsson, Daniel, SE-186 53 VALLENTUNA (SE); Cheng, Jung-Fu, FREMONT, CA California 94539 (US); Frenne, Mattias, SE-754 43 UPPSALA (SE)
(74) Representative: Ericsson

(56) References cited:
- EP-A2- 1 096 718
- WO-A1-2011/098186
- WO-A1-2011/120716

## Description

### TECHNICAL FIELD

Embodiments herein relate to a network node and methods therein. In particular, some embodiments herein relate to apply power scaling to uplink transmissions in a multiple cell communications network.

### BACKGROUND

In today's radio communications networks a number of different technologies are used, such as Long Term Evolution (LTE), LTE-Advanced, Wideband Code Division Multiple Access (WCDMA), Global System for Mobile communications/Enhanced Data rate for GSM Evolution (GSM/EDGE), Worldwide Interoperability for Microwave Access (WiMax), or Ultra Mobile Broadband (UMB), just to mention a few possible implementations. A radio communications network comprises radio base stations providing radio coverage over at least one respective geographical area forming a cell. The cell definition may also incorporate frequency bands used for transmissions, which means that two different cells may cover the same geographical area but using different frequency bands. User equipments (UE) are served in the cells by a respective radio base station, also called e.g. eNodeB (eNB), and are communicating with the respective radio base station. The user equipments transmit data over an air or radio interface to the radio base stations in uplink (UL) transmissions and the radio base stations transmit data over an air or radio interface to the user equipments in downlink (DL) transmissions.

LTE uses Discrete Fourier Transform- Spread- Orthogonal Frequency Division Multiplexing (DFTS-OFDM) or Single Carrier-Frequency Division Multiple-Access (SC-FDMA) in the uplink. In the time-domain the time-axis is divided into subframes of 1 ms and each subframe is divided into 12, using long cyclic prefix, or 14, using normal cyclic prefix, SC-FDMA symbols.

Data is transmitted on Physical Uplink Shared Channel (PUSCH). Bits are encoded, interleaved, scrambled, and transmitted via the SC-FDMA modulator. In the receiver an inverse process happens. During the demodulation the receiver typically calculates soft values or soft bits, one for each information bit or sometimes even one for each coded bit, which correspond to likelihoods that a bit is zero or one.

Another UL channel is the control channel Physical Uplink Control Channel (PUCCH). PUCCH applies block spreading, i.e. information is spread with spreading sequences over multiple SC-FDMA symbols. This improves coverage since information is transmitted with more energy but also enables multiplexing with others using the same time-frequency resources but different spreading sequences. To make different transmissions orthogonal, not interfering with one another, the repetitions must be done with the same power; the copy in different SC-FDMA symbol must be transmitted with the same power. If certain SC-FDMA symbols are transmitted with different power orthogonality is impaired.

Sounding Reference Signals (SRS) are UL reference signals that give the eNB, radio base station in LTE is mostly denoted eNB or eNodeB, information about UL channel state. SRSs are transmitted within the last SC-FDMA symbol of a subframe.

In LTE, transmissions from different user equipments may be multiplexed into the same SC-FDMA symbol using different frequencies. To maintain orthogonality among user equipments it is important that the UL signals from different user equipments arrive time-aligned at the UL receiver.

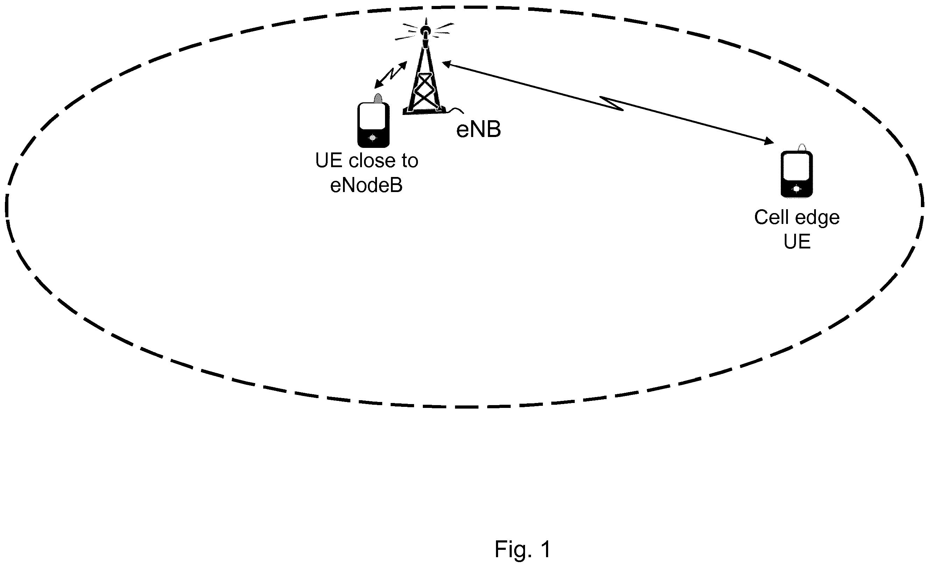

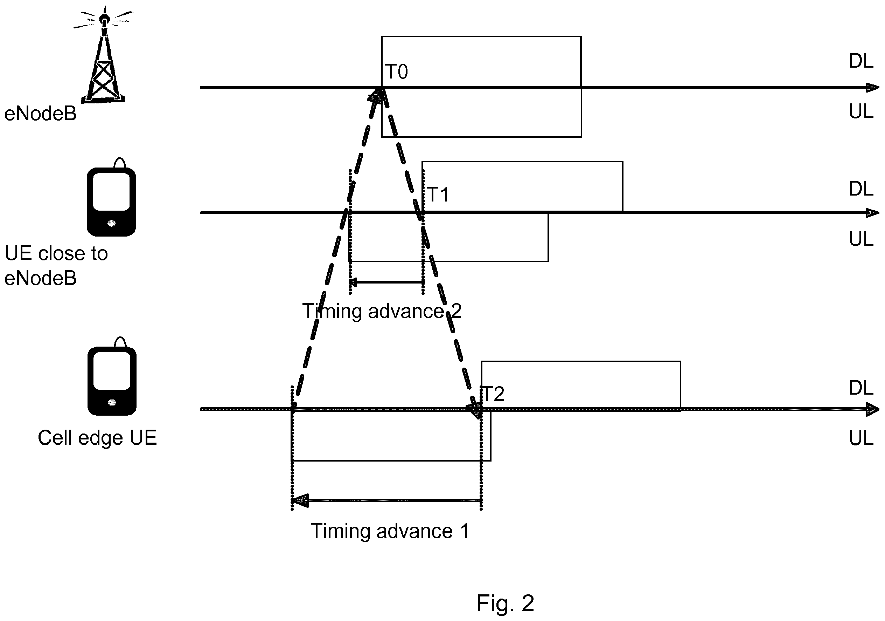

Since user equipments may be located at different distances from the eNB, as shown in **Figure 1****,** the user equipments will need to initiate their UL transmissions at different times. Figure 1 is an Illustration of two user equipments at different distance from the eNB. A user equipment far from the eNB, called Cell edge UE, needs to start transmission earlier than a user equipment close to the eNodeB. This can for example be handled by timing advance of the UL transmissions, which means that a user equipment starts its UL transmission before a nominal time given by the timing of the DL signal received by the user equipment. This concept is illustrated in **Figure 2****,** which shows timing advance of UL transmissions from the user equipment depending on distance to the eNB. A DL transmission transmitted at time T0 from the eNodeB is received by the UE close to the eNodeB at T1. The same transmission is received at the cell edge UE at T2. For the eNodeB to receive all UL transmissions simultaneously after the transmission of the DL packet, the Cell edge UE is transmitting the UL transmission with a timing advance 1. The UE close to the eNodeB is transmitting UL transmission with a timing advance 2.

The UL Timing Advance (TA) is maintained by the eNodeB through TA commands sent to the user equipment based on measurements on UL transmissions from that user equipment. Through TA commands, the user equipment is ordered to start its UL transmissions earlier or later. This applies to all UL transmissions except for random access preamble transmissions on Physical Random Access Channel (PRACH).

LTE Release-10 specifications have recently been standardized, supporting cell bandwidths up to 20 MHz, which is the maximal LTE Release-8 bandwidth. An LTE Release-10 operation wider than 20 MHz is possible and appear as a number of LTE cells to an LTE Release-10 user equipment.

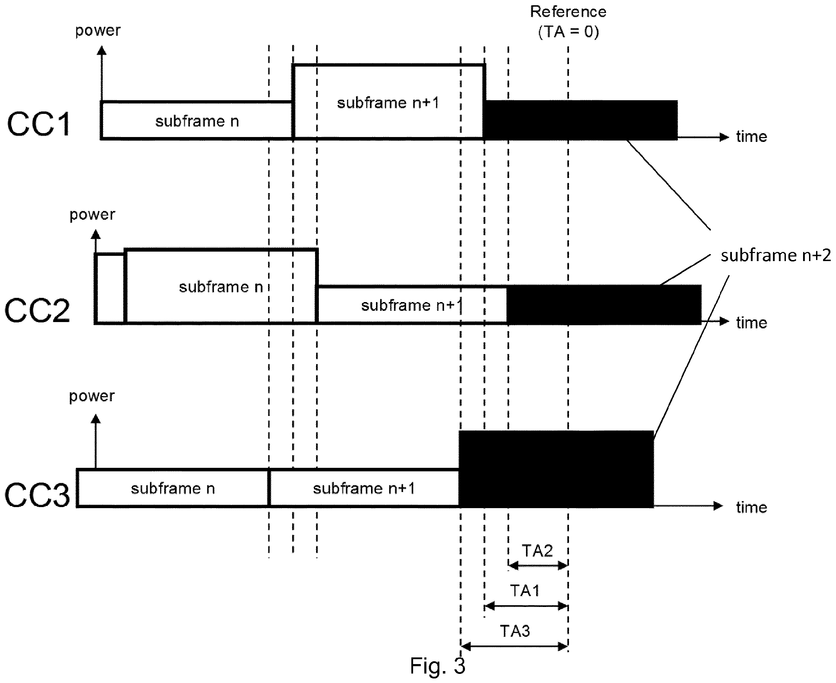

In particular for early LTE Release-10 deployments it can be expected that there will be a smaller number of LTE Release-10-capable user equipments compared to many LTE legacy user equipments. Therefore, it is necessary to assure an efficient use of a wide carrier also for legacy user equipment, i.e. that it is possible to implement carriers where legacy user equipments may be scheduled in all parts of the wideband LTE Release-10 carrier. The straightforward way to obtain this would be by means of Carrier Aggregation (CA). CA implies that an LTE Release-10 user equipment may receive multiple cells or carriers, where the cells have, or at least the possibility to have, the same structure as a Release-8 cell. CA is illustrated in **Figure 3****.** Cell 1 or as referred to in the Figure 3 Component Carrier 1 (CC1) has a TA1 with reference to TA=0. Cell 2 or as referred to in the Figure 3 Component Carrier 2 (CC2) has a TA2 with reference to TA=0. Cell 3 or as referred to in the Figure 3 Component Carrier 3 (CC3) has a TA3 with reference to TA=0. In this example all TA are measured towards the same timing reference TA=0, in a more general setup all TA could be measured against different timing references. It is also illustrated that different subframes over the different cells are transmitted with different levels of transmit power or transmission power. Time is defined along a horizontal axis and power is defined along a vertical axis.

To support scenarios where different UL cells, also referred to as carriers, are received at geographical different locations or frequency selective UL repeaters multiple TA values are required. The eNB must be able to control the UL reception timing of each cell to maintain orthogonality on each cell. Thus, multiple TAs may be needed to control them individually. Since the TA value controls the UL transmission timings different TA values imply misaligned UL subframes, see Figure 3.

The end and beginning of subframes on the individual cells are determined by the TA commands; TA1 to TA3 for cell Component Carrier 1 (CC1) to Component Carrier 3 (CC3), respectively, in Figure 3. Since the eNB knows the TA commands it also knows the end and beginning of subframes. Due to different TA values UL subframes are not time aligned. In the transition period from subframe *n* + 1 to *n* + 2 the requested power exceeds the available transmit power since cell CC3 requests higher power but the other two cells have not yet reduced their transmit power. Since the overall signal transmitted by the UE cannot exceed the maximum power, the signal power will be limited by the power amplifier which can lead to unpredictable effects, e.g. the transmission may be interrupted during communication leading to a reduced performance of the multiple cell communications network. WO 2011/120716 shows a system where mobile terminal adjusts the transmit power utilized by the mobile terminal for uplink transmissions, and to methods for adjusting the transmit power used by a mobile terminal for one or more RACH procedures.

### SUMMARY

An object of embodiments herein is to provide a mechanism that improves the performance in the multiple cell communications network.

According to an aspect the object is achieved by a method in a network node for demodulating uplink transmissions from a user equipment in a multiple cell communications network according to claim 1. According to yet another aspect the object is achieved by a network node, for demodulating uplink transmissions from a user equipment in a multiple cell communications network according to claim 6. Preferred embodiments of the invention are stipulated in the dependent claims. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention. By performing power scaling based on the timing advance information, the user equipment behavior becomes predictable. Since power scaling is done only over parts of the subframe performance, impairment is also less compared to the case if the complete subframe would be scaled. Protection of a certain cell e.g. a cell carrying critical information, also protects critical control signaling improving performance and robustness of the connection.

### BRIEF DESCRIPTION OF THE DRAWINGS

Embodiments will now be described in more detail in relation to the enclosed drawings, in which:
Figure 1 is a schematic overview depicting a radio communications network,
Figure 2 is a schematic overview illustrating timing advance in a multiple cell communication network,
Figure 3 is a schematic overview illustrating power distribution over subframes,
Figure 4 is schematic overview depicting a multiple cell communication network according to embodiments herein,
Figure 5 is a combined flow chart and signalling scheme according to embodiments herein,
Figure 6 is schematic overview depicting power distribution over subframes according to embodiments herein,
Figure 7 is schematic overview depicting power distribution over subframes according to embodiments herein,
Figure 8 is schematic overview depicting power distribution over subframes according to embodiments herein,
Figure 9 is schematic overview depicting power distribution over subframes according to embodiments herein,
Figure 10 is a schematic flow chart depicting methods according to embodiments herein,
Figure 11 is a schematic flow chart depicting methods according to embodiments herein,
Figure 12 is a schematic overview depicting embodiments herein,
Figure 13 is a block diagram depicting a user equipment according to embodiments herein,
Figure 14 is a schematic overview depicting embodiments herein, and
Figure 15 is a block diagram depicting a network node according to embodiments herein.

### DETAILED DESCRIPTION

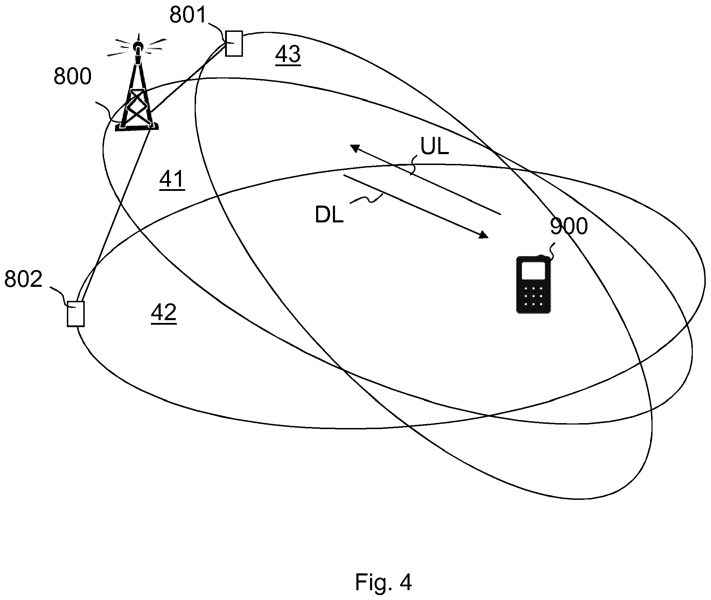

**Figure 4** is a schematic overview depicting a multiple cell communications network. The multiple cell communications network may comprise a Universal Mobile Telecommunications System (UMTS), which is a third generation mobile communication system that evolved from the second generation (2G) GSM. The UMTS terrestrial radio access network (UTRAN) is essentially a Radio Access Network (RAN) using WCDMA for user equipments. In a forum known as the Third Generation Partnership Project (3GPP), telecommunications suppliers propose and agree upon standards for third generation networks and UTRAN specifically, and investigate enhanced data rate and radio capacity. Specifications for the Evolved Packet System (EPS) have completed within the 3GPP and this work continues in the coming 3GPP releases. The EPS comprises an Evolved Universal Terrestrial Radio Access Network (E-UTRAN), also known as the Long Term Evolution (LTE) radio access, and the Evolved Packet Core (EPC), also known as System Architecture Evolution (SAE) core network. E-UTRAN/LTE is a variant of a 3GPP radio access technology wherein the radio base station is directly connected to the EPC core network rather than to a Radio Network Controller (RNC). In general, in E-UTRAN/LTE the functions of a RNC are distributed between the radio base stations, e.g., eNodeBs in LTE, and the core network. As such, the Radio Access Network (RAN) of an EPS system has an essentially "flat" architecture comprising radio base stations without reporting to RNCs. The multiple cell communications network may thus be LTE, LTE-Advanced, WCDMA, GSM/EDGE, WiMax, or UMB, just to mention a few possible implementations.

Each cell may be served or provided by **a network node 800** and/or by e.g. **remote radio units (RRU), a first RRU 801 and a second RRU 802** connected to the network node 800. The RRU are transmitters and/or receivers that may be geographically separated from the network node 800. The cells may alternatively be provided by different network nodes, e.g. relays, respectively. In the illustrated example the network node 800 serves **a first cell 41,** which may be exemplified herein as a Primary Cell or a Component Carrier 1, the first RRU 801 serves **a second cell 42,** which may be exemplified herein as a Secondary Cell 1 or a Component Carrier 2, and the second RRU 802 serves **a third cell 43,** which may be exemplified herein as a Secondary Cell 2 or a Component Carrier 3. A cell is associated with the network node 800. The network node 800 may also be referred to as a radio node, radio base station, radio network node or eNodeB in the example embodiment description, and comprises in a general sense any node transmitting radio signals used for measurements, e.g., eNodeB, macro/micro/pico base station, home eNodeB, relay, beacon device, or repeater. Thus the network node 800 herein may comprise a radio node operating in one or more frequencies or frequency bands. It may be a network node capable of CA. It may also be a single- or muti-RAT node. A multi-RAT node may comprise a node with co-located RATs or supporting multistandard radio (MSR) or a mixed radio node. The network node 800 may also be referred to as e.g. a NodeB, a base transceiver station, an Access Point Base Station, a base station router, beamer or any other network unit capable to communicate with a user equipment within the cell served by the network node 800 depending e.g. of the radio access technology and terminology used.

In the illustrated example, **a user equipment 900** receives DL transmissions in the different cells 41,42,43 or transmits UL transmissions over the cells 41,42,43 via the network node 800 or respective RRU 801,802. It should be understood by the skilled in the art that "user equipment" is a non-limiting term which means any wireless terminal, device or node e.g. Personal Digital Assistant (PDA), laptop, terminal, mobile, sensor, relay, mobile tablets or even a small base station communicating within respective cell. The user equipment 900 may be a radiotelephone having ability for Internet/intranet access, web browser, organizer, calendar, a camera (e.g., video and/or still image camera), a sound recorder (e.g., a microphone), and/or Global Positioning System (GPS) receiver; a Personal Communications System (PCS) terminal that may combine a cellular radiotelephone with data processing; a Personal Digital Assistant (PDA) that may comprise a radiotelephone or wireless communication system; a laptop; a camera, e.g., video and/or still image camera, having communication ability; and any other computation or communication device capable of transceiving, such as a personal computer, a home entertainment system, a television, etc. Although the description is mainly given for a user equipment, as measuring or recording unit, it should be understood by the skilled in the art that the "user equipment" 900 may be any wireless device or node capable of receiving in DL and transmitting in UL, e.g. PDA, laptop, mobile, sensor, mobile tablet, fixed relay, mobile relay or even a radio base station, e.g. femto base station.

The network node 800 thus communicates over an air interface operating on radio frequencies, also referred to as carriers or cells, with user equipments, such as the user equipment 900, within range of the network node 800. The cell definition may also incorporate frequency bands used for transmissions, which means that two or more different cells may cover the same geographical area but using different frequency bands. The user equipment 900 is configured to transmit uplink transmissions to the network node 800 over a plurality of aggregated cells, such as cells 41,42,43.

Although the described embodiments may be implemented in any appropriate type of telecommunication system supporting any suitable communication standards and using any suitable components, particular embodiments of the described embodiments may be implemented in an LTE network, the example network may include one or more instances of the user equipment 900, e.g. wireless devices, mobile terminals, laptops, Machine To Machine (M2M) -capable devices, or home base station, and one or more network nodes capable of communicating with these wireless devices, where examples of network nodes include eNBs, home base stations, relays, positioning node, such as evolved Service Mobility Location Centre (eSMLC), Mobility Management Entity (MME), Self-Organising network (SON) node, and Gateway, mobiles and UEs. Thus, some network nodes such as home base stations, may in some scenarios be considered as wireless devices within the context of this disclosure. This is in particular true for small network nodes where the form factor may significantly affect radio performance.

In the illustrated example the user equipment 900 is positioned at different distances from the respective transmitter in the network node 800 and the RRUs 801,802. Thus, the network node 800 determines different timing advance values for the different cells based on received signals in the UL from the user equipment 900. The network node 800, and/or the RRUs 801 or 802 transmits the timing advance information of respective cell to the user equipment 900. The user equipment 900 then receives the timing advance information for the cells, also referred to herein as aggregated cells. In order to limit transmit power over transition periods, which transition periods are due to different timing advance values or information, the user equipment 900 applies a power scaling to uplink transmissions of at least one aggregated cell based on the received timing advance information. Thus, power is reduced over these time intervals where a time misalignment between subframes over different cells creates power limitations. In the following the terms "transition period" or "uncertainty period" or "uncertainty zone" for these time interval or periods is mostly used where at least two different subframes are transmitted from two or more cells UL with transmit power that may be power scaled.

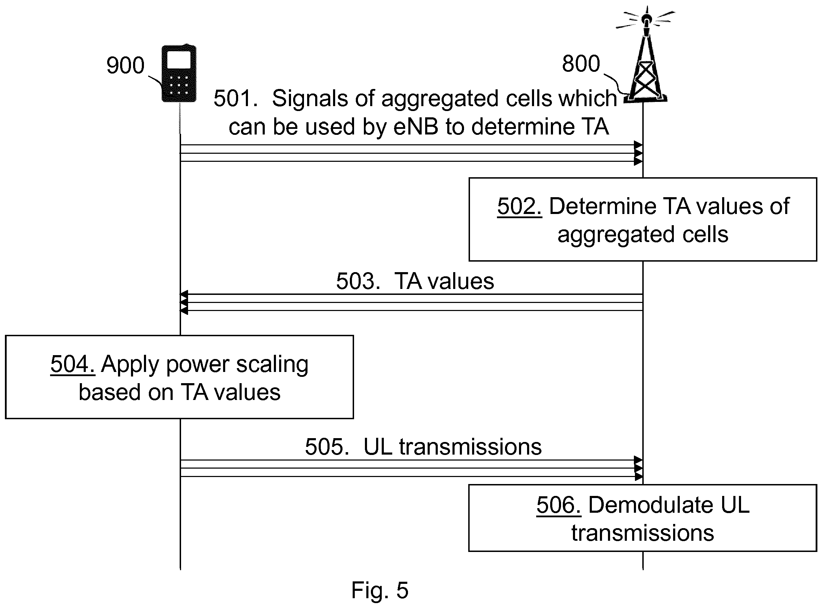

**Figure 5** is a schematic combined flowchart and signalling scheme according to some embodiments herein.

**Action 501.** The user equipment 900 transmits signals to the network node 800 over each respective aggregated cell which may be used by the network node 800 to determine Timing Advance (TA) information.

**Action 502.** The network node 800 determines Timing Advance (TA) information such as timing advance values based on analysis of the received signals for each respective aggregated cell.

**Action 503.** The network node 800 transmits the timing advance information, e.g. TA commands comprising timing advance values, to the user equipment 900.

**Actions 504.** The user equipment 900 applies power scaling in at least parts of the transition periods based on the received TA values or information.

**Action 505.** The user equipment 900 then performs UL transmissions using the power scaling in the at least part of the transition periods.

**Action 506.** The network node 800 demodulates the UL transmissions taking into account that power scaling has been applied in the at least parts of the transition periods. The network node 800 either knows the transition periods from the determined Timing advance information or by detecting the transmission zones during reception of signals.

Within transition periods where one carrier, or cell, is still transmitting a subframe n but another subcarrier is already transmitting subframe n+1 UE transmit power limitations may arise. For example, even though the scheduling assignments may not lead to any transmit power limitation during the periods where all cells transmit the same subframe, transmit power may not be enough in transition periods if one cell increases its requested transmit power but another cell is not yet transmitting the next subframe. See Figure 3 above for an example. Today the transmit power is maintained, or a same power level is used, within a subframe since this helps during demodulation.

However, different embodiments will herein be described on how the available transmit power may be shared across transmitting cells without there being a problem that transmit power is varied within a subframe. In some embodiments a specific cell, e.g. a Primary Cell (PCell) in CA, is protected, i.e. the user equipment 900 does not apply any power scaling whereas for other cells, such as Secondary Cells (SCell), the user equipment 900 has to reduce its transmit power in case of power limitations. Other embodiments propose to configure maximum powers per cell such that power limitations cannot happen.

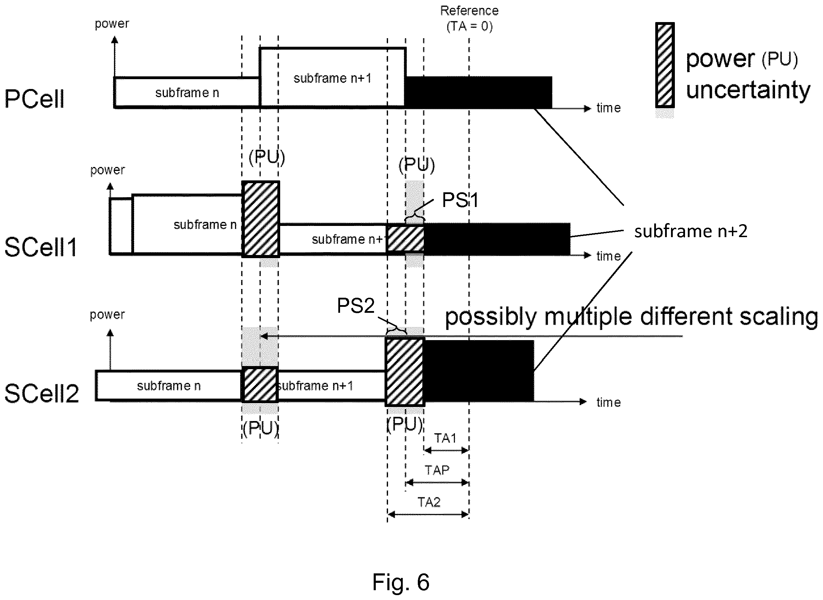

**Figure 6** is a block diagram depicting transmissions over time according to some embodiments herein. Power, actually transmit power, is defined along a vertical axis and time is defined along a horizontal axis. Power Uncertainty (PU) zones are diagonally striped. A Pcell, e.g. the first cell 41, has a Timing advance value defined as TAP with reference to TA=0. A SCell1, e.g. the second cell 42, has a Timing advance value defined as TA1 with reference to TA=0. A Scell2, e.g. the third cell 43, has a Timing advance value defined as TA2 with reference to TA=0. In this example all TA are measured towards the same timing reference TA=0, in a more general setup all TA may be measured against different timing references. It is also illustrated that different subframes over the different cells are transmitted with different levels of transmit power.

In the illustrated embodiments the transmitted power of the PCell within a subframe is not changed. The transmitted power of the PCell may of course change at subframe boundaries but is kept constant within a PCell. When stating that the transmit power is kept constant it is mostly meant here that the LTE standard does not actively describe, or support yet, a method to change the transmitted power from the user equipment 900. Imperfections in the transceiver may nevertheless lead to power changes within certain tolerances. Thus no intentional change of transmit power is described in the LTE Standard this far, to the date of filing this disclosure.

All the required power reductions, if needed, are performed by SCells. Depending on the timing of SCells relative to the PCell the power scaling may occur at the beginning, end or beginning and end of a SCell subframe. In the example of Figure 6 SCell1 applies the power scaling, if needed, at the end of a subframe, indicated by a PS1, and SCell2 at the beginning of a subframe, indicated by a PS2. It may also be possible that SCell1 starts to apply power scaling at the same time as SCell2, not shown in Figure 6. The power scaling may vary within the power uncertainty period, which is denoted as PU in Figure 6.

The power scaling of SCells may be proprietary to the user equipment 900 or can be specified. In the simplest case the SCells set the transmitted power to zero during their power uncertainty periods, e.g. during the PU zones marked with dashed lines between subframe n and subframe n+1 and between subframe n+1 and subframe n+2 or during PS1/PS2 zone. However, it should be appreciated that the power may be scaled to any other value. The power scaling may possibly be multiple different power scaling over different PU zones, and may be performed over a complete symbol comprising the PU zones or zones.

The reception performance of the PCell - which may be argued is the most important cell - is never impaired. That is, the transmit power of the PCell may not be under power scaling. Also PUCCH orthogonality and SRS integrity of the PCell are maintained as no power scaling is performed. SRS transmission on SCells may be impaired if the power scaling is applied at the end of the subframe. To avoid SRS impairments of SCells eNB may consider this during scheduling and make sure no power limitation will occur when a SCell SRS is sent since then probably also no power scaling needs to be applied.

The network node 800 is aware of the location of the PU zones and PS1/PS2 zone, due to the TA commands for each cell, for each cell and considers this during demodulation of the received signal. For PUSCH, for example, soft values within the PU zones may be scaled differently. If the network node 800 does not know by how much the power is scaled a simple choice may be to set the soft value to zero, i.e. ignore them during decoding and demodulating.

If the user equipment 900 has no power limitation during uncertainty periods or PU zones it does not apply any power scaling due to multiple TA. If it switches between no scaling, i.e. no power limitation, and zero power, i.e. power limitation, the network node 800 can make energy detection and determine if soft values during uncertainty periods should be ignored or used.

Instead of the PCell also another cell may be configured to be protected, i.e. does not apply scaling due to multiple TA. Such signaling may typically happen via Radio Resource Control (RRC) signaling. In figure 6 the PCell may be set to be the first Component Carrier or any other selected Component Carrier (CC).

In some embodiments, depending on the timing of SCells relative to the PCell the power scaling of the Scells may occur at the beginning or end of an SCell subframe. The Pcell is protected and does not apply any scaling as it contains the important PUCCH information.

The user equipment 900 is assumed to know the target power, in the middle of the subframe, for each cell for the next subframe n+1. This may for instance be obtained from the information in the Downlink Control Information (DCI) and also the maximum transmit ,or output, power for all cells combined is considered. The Scells adjusts their power at the beginning of subframe n+1 or end of subframe n dependent on the timing relative to the Pcell as follows.

An Scell that starts to transmit a subframe before the Pcell limits the power used in subframe n+1 to the power used in subframe n until subframe n has ended for the Pcell and then ramps its power to the target power for this Scell in subframe n+1. It may also set its power to zero during the transition period. This only applies if a power limitation occurs in the transition period.

An Scell that starts to transmit a subframe after the Pcell ramps the power before the end of subframe n to the target power of subframe n+1 for this Scell so that when subframe n+1 starts in the Pcell the Scell has reach its target power for subframe n+1. The Scell then keeps this power for the remaining time of subframe n and into subframe n+1. It may also set its power to zero during the transition period. This only applies if a power limitation is needed or occurs in the transition period.

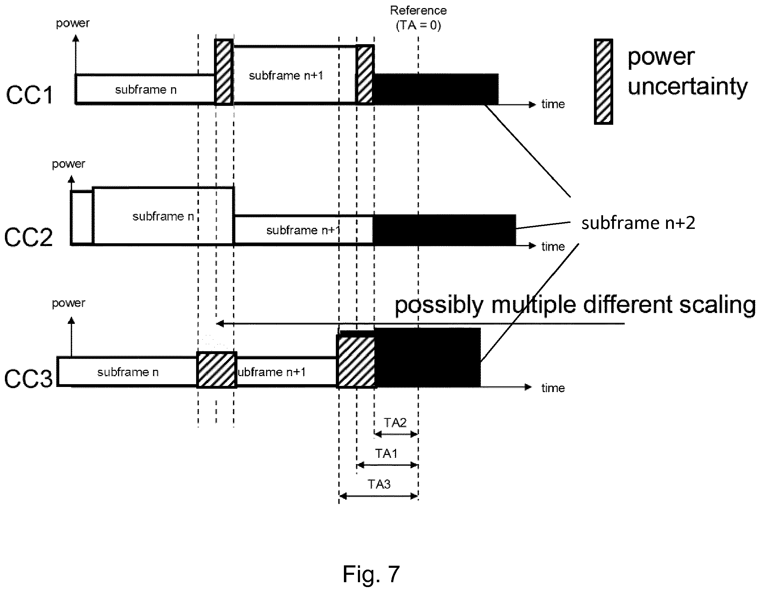

**Figure 7** is a block diagram depicting transmissions over time according to some embodiments herein. Figure 7 differs from figure 6 in that the power scaling is performed based on when transmitting subframes in time. Power, actually transmit power, is defined along a vertical axis and time is defined along a horizontal axis. PU zones are diagonally striped. CC1 has a Timing advance value defined as TA1 with reference to TA=0. CC2 has a Timing advance value defined as TA2 with reference to TA=0. CC3 has a Timing advance value defined as TA3 with reference to TA=0. In this example all TA are measured towards the same timing reference TA=0, in a more general setup all TA may be measured against different timing references. It is also illustrated that different subframes over the different cells are transmitted with different levels of transmit power.

In the illustrated embodiment the power scaling is applied **at the beginning** of a subframe. Power scaling, if needed, starts on a cell at the beginning of the next subframe on this cell and continues until the latest cell starts its next subframe. An example is provided in Figure 7. An earliest cell CC3, meaning that the cell CC3 transmits a subframe first in time, starts to reduce its transmit power, if needed, when it starts to transmit the new subframe. Cell CC1 - which is next in time - reduces its power, if needed, starting with its transition into the next subframe. If a reduction of CC1 is not sufficient even CC3 may have to reduce its power further. In general power scaling may vary within power uncertainty periods, denoted in the figure as possibly multiple different scaling. The latest cell, i.e. CC2, does not apply any power scaling within the transition period due to multiple TA. The statement "does not apply any power scaling" means that the standard does not actively describe a method to change the transmitted power due to multiple TA for this cell, imperfections in the transceiver may nevertheless lead to power changes within certain tolerances.

The power scaling of cells may be proprietary to the user equipment 900 or may be specified. In the simplest case the cells set the transmitted power to zero during their power uncertainty periods.

PUCCH orthogonality is impaired unless the PCell is the latest cell; in this case no power scaling is applied. Since the power scaling is applied at the beginning of a subframe SRS transmissions are not impacted.

The network node 800 is aware of the location of the power uncertainty periods , due to the TA commands for each cell, for each cell and considers this during demodulation of the received signal. For PUSCH, for example, soft values within the PU zones may be scaled differently. If the network node 800 does not know by how much the power is scaled a simple choice may be to set the soft value to zero, i.e. ignore them during decoding or demodulating.

If the user equipment 900 has no power limitation during uncertainty periods it does not apply any scaling due to multiple TA. If it switches between no scaling, i.e. no power limitation, and zero power, i.e. power limitation, the network node 800 may make energy detection and determine if soft values during uncertainty periods should be ignored or used.

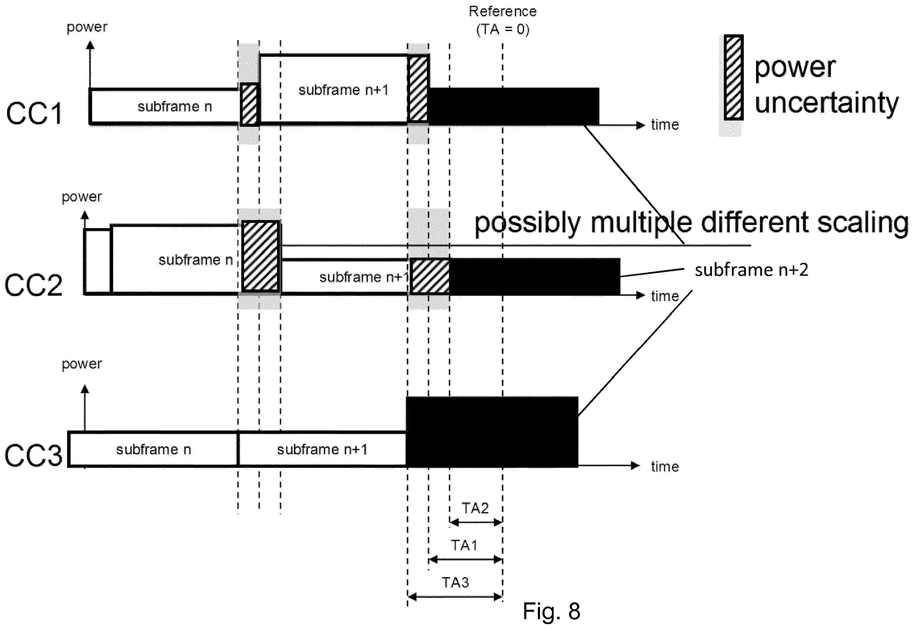

**Figure 8** is a block diagram depicting transmissions over time according to some embodiments herein. Figure 8 differs from figure 7 in that the power scaling is performed on cells transmitting after a cell, i.e. power scaling is not performed on a cell transmitting a subframe first in time. Power, actually transmit power, is defined along a vertical axis and time is defined along a horizontal axis. PU zones are diagonally striped. CC1 has a Timing advance value defined as TA1 with reference to TA=0. CC2 has a Timing advance value defined as TA2 with reference to TA=0. CC3 has a Timing advance value defined as TA3 with reference to TA=0. In this example all TA are measured towards the same timing reference TA=0, in a more general setup all TA may be measured against different timing references. It is also illustrated that different subframes over the different cells are transmitted with different levels of transmit power.

Power scaling, if needed, is triggered when the earliest cell starts to transmit the new subframe. However, since power scaling is applied **at the end** of the subframe it is not the cell that changes into the next subframe that applies the power scaling but all other cells. In the example provided in Figure 8 third cell CC3 is the earliest. At the time instance CC3 starts with the next subframe power on CC1 and/or CC2 is reduced, if needed. At the time the next cell transitions into the next subframe, CC1 in the example, cell CC2 may have to reduce its transmit power even further since from now on neither CC1 nor CC3 applies any scaling due to multiple TA. In general power scaling may vary within power uncertainty periods. The earliest cell never applies a power scaling within the transition period or PU zone due to multiple TA. SRS transmissions are impaired since the power scaling is applied at the end of a subframe. PUCCH orthogonality may also be impaired.

The statement "does not apply any power scaling" means that the standard does not actively describe a method to change the transmitted power due to multiple TA for this cell, imperfections in the transceiver may nevertheless lead to power changes within certain tolerances.

The power scaling of cells may be proprietary to the user equipment 900 or may be specified. In the simplest case the cells set the transmitted power to zero during their power uncertainty periods.

The network node 800 is aware of the location of the power uncertainty periods , due to the TA commands for each cell, for each cell and considers this during demodulation of the received signal. For PUSCH, for example, soft values within the PU zones may be scaled differently. If the network node 800 does not know by how much the power is scaled a simple choice may be to set the soft value to zero, i.e. ignore them during decoding or demodulating.

If the user equipment 900 has no power limitation during uncertainty periods it does not apply any scaling due to multiple TA. If it switches between no scaling, i.e. no power limitation, and zero power, i.e. power limitation, the network node 800 may make energy detection and determine if soft values during uncertainty periods should be ignored or used.

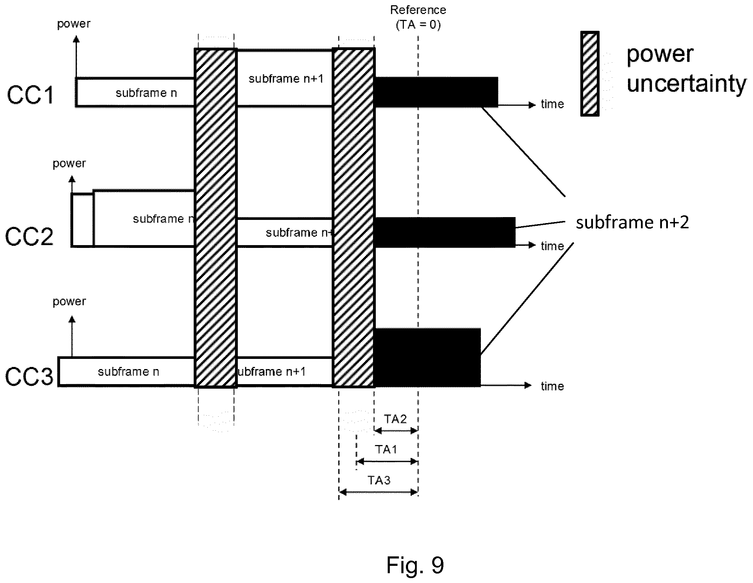

**Figure 9** is a block diagram depicting transmissions over time according to some embodiments herein. Figure 9 differs from figures 6-8 in that the power scaling is performed on all cells over the complete uncertainty periods. Power, actually transmit power, is defined along a vertical axis and time is defined along a horizontal axis. PU zones are diagonally striped. CC1 has a Timing advance value defined as TA1 with reference to TA=0. CC2 has a Timing advance value defined as TA2 with reference to TA=0. CC3 has a Timing advance value defined as TA3 with reference to TA=0. In this example all TA are measured towards the same timing reference TA=0, in a more general setup all TA may be measured against different timing references. It is also illustrated that different subframes over the different cells are transmitted with different levels of transmit power.

All cells may apply power scaling within the uncertainty period or PU zones if the requested transmit power exceeds the available transmit power, a maximum transmit power. As soon as the total requested power exceeds the available transmit power, transmit power is reduced on all currently transmitting cells, see Figure 9. The transition time, in this case the PU zone, during which power scaling may be needed starts when the earliest cell begins to transmit the next subframe and ends when the latest cell starts to transmit the new subframe. If the total requested power exceeds the available transmit power the transmit power of all currently transmitting cells is reduced.

The power scaling of cells may be proprietary to the user equipment 900 or may be specified. In the simplest case the cells set the transmitted power to zero during their power uncertainty periods.

Since the power scaling may happen both at the beginning and end of subframes - depending on the timing of the cell with regards to other cells - SRS and PUCCH may be impaired.

The network node 800 is aware of the location of the power uncertainty periods, due to the TA commands for each cell, for each cell and considers this during demodulation of the received signal. For PUSCH, for example, soft values within the PU zones may be scaled differently. If the network node 800 does not know by how much the power is scaled a simple choice may be to set the soft value to zero, i.e. ignore them during decoding or demodulating.

If the user equipment 900 has no power limitation during uncertainty periods it does not apply any scaling due to multiple TA. If it switches between no scaling, i.e. no power limitation, and zero power, i.e. power limitation, the network node 800 may make energy detection and determine if soft values during uncertainty periods should be ignored or used.

Thus, according to the example embodiments, at least five different embodiments for applying power scaling may be considered. Some of them already discussed earlier and some are explained earlier but in different wordings.

### Embodiment 1: Limit maximum power on each cell

A configured cap on the maximal power of each cell, e,g, cells 41,42,43, may prevent power limitations within transition periods. The sum of these power limits across all cells should not exceed 23 dBm, minus some power back-offs specified in RAN4. An advantage of this method is that the transmit power within one subframe may be constant which improves reception in the network node 800. On the other hand maximum bandwidth and Modulation and Coding Scheme (MCS) that may be allocated to a cell is limited, even though if there are no transmissions ongoing on other cells.

### Embodiment 2: Scale the transmit power equally on all cells

As soon as the total requested power exceeds the available transmit power, the power is reduced on all currently transmitting cells, such as all cells 41-43 also see Figure 9 above. The transition time, during which power scaling may be needed, starts when the earliest cell begins to transmit the next subframe and ends when the latest cell starts to transmit the new subframe.

Embodiment 2 is characterized in that the transition period/region/zone - i.e. the time during which power uncertainties can occur-has the same (maximum) length on each cell. Depending on the relative timing this uncertainty may occur at the end, beginning, or both ends of a subframe. Due to power uncertainties within the transition periods reception performance degrades, especially since the transition periods have maximum length on all cells, which is the offset between latest and earliest cell. Also PUCCH orthogonality is impaired if e.g. parts of an SC-FDMA symbol are transmitted with less power.

### Embodiment 3: Power scaling at beginning of subframe

Power scaling, if needed, starts on a cell, e.g. cells 41,42,43, at the beginning of the next subframe on this cell and continues until the latest cell starts its next subframe. An example is provided in Figure 7. The earliest cell CC3 starts to reduce its transmit power, if needed, when CC3 starts to transmit the new subframe. Cell CC1 -which is next in time - reduces its transmit power, if needed, starting with its transition into the next subframe. If a reduction of CC1 is not sufficient even CC3 may have to reduce its power further. The latest cell CC2 does not apply any power scaling, on top of Release-10 scaling, within the transition period.

Depending on the relative timing of a cell with regards to the other cells the transition periods have different length but are never longer than in Embodiment 2 above. Since the network node 800 is aware of the relative timings, TA commands, the network node 800 knows the power uncertainty length of each cell and may use this information to improve reception performance compared to Embodiment 2. PUCCH orthogonality is impaired unless the PCell is the latest cell, in this case no power scaling is applied. Since the power scaling is applied at the beginning of a subframe SRS transmissions are not impacted. Thus in this embodiment power scaling is applied at the beginning of a new subframe, if needed, and no power scaling is applied to the latest cell.

### Embodiment 4: Power scaling at end of subframe

Power scaling, if needed, is triggered when the earliest cell starts to transmit the new subframe. However, since power scaling is applied at the end of the subframe it is not the cell that changes into the next subframe that applies the power scaling but all other cells. In the example provided in Figure 8 cell CC3 is earliest. At the time instance CC3 starts with the next subframe, the transmit power on CC1 and CC2 is reduced, if needed. At the time the next cell, CC1 in the example in Figure 8, transitions into the next subframe, cell CC2 may have to reduce its power even further since from now on neither CC1 nor CC3 applies any power scaling. The earliest cell never applies a power scaling within the transition period, on top of Release-10 scaling.

As in Embodiment 3 the power uncertainty period of a cell depends on its relative timing with regards to the other cells but is never longer than in Embodiment 2. Since the network node 800 knows these relative timings the network node 800 may use this information to improve reception performance compared to Embodiment 2. SRS transmissions are impaired since the power scaling is applied at the end of a subframe. PUCCH orthogonality is also impaired. Thus according to this embodiment power scaling is applied at the end of a subframe, if needed, no power scaling is applied to the earliest cell.

### Embodiment 5: Power scaling is never applied to the PCell

The PCell applies never power scaling within the power uncertainty period, on top of any Release-10 scaling. This has the advantage that PUCCH orthogonality is maintained and PCell PUSCH reception does not suffer from unequal powers within a subframe. All the required power reductions are performed by SCells. Depending on the timing of SCells relative to the PCell the power scaling may occur at the beginning or end of an SCell subframe. In the example of Figure 6 SCell1 applies the power scaling, if needed, at the end of a subframe and SCell2 at the beginning of a subframe.

The power uncertainty period of an SCell depends on its relative timing with regards to the other cells but is never longer than in Embodiment 2. Again, since the network node 800 knows these relative timings the network node 800 may use this information to improve reception performance compared to Embodiment 2. Furthermore is reception performance of the PCell - which may be argued is the most important cell - never impaired. Also PUCCH orthogonality and SRS integrity of the PCell are maintained. SRS transmission on SCells may be impaired if the power scaling is applied at the end of the subframe.

It should be appreciated that in the example embodiments described above, cells in which there is no power scaling applied by still experience slight variations in power due to imperfections in hardware.

Furthermore, a maximum power per UL cell maybe configured such that power limitations in transition periods never occur. This configuration may typically be signaled with RRC signaling.

When comparing the different embodiments the following may be noted:
With Embodiment 1 no power, or almost no power, variations within a subframe occur. However, even if power is not needed on other cells the transmit power on any given cell is limited to the configured limit. This may limit both performance and coverage.
Embodiment 2 may lead to unequal transmit powers within a subframe on all cells and the power uncertainty periods have furthermore the maximum length on all cells. Compared to Embodiments 3 to 5 reception performance of Embodiment 2 is inferior and may in some cases not provide any benefits.
Embodiments 3 to 5 are rather similar with regards to power uncertainty periods. The PU zone has not maximum length on all cells and the network node 800 - which knows the timing uncertainty periods due to TA commands - may use this information to improve reception performance. Embodiment 3 - which applies power scaling at the beginning of a subframe - protects SRS transmissions. PUCCH orthogonality is impaired for both Embodiment 3 and 4. In Embodiment 5 - power on the PCell is never scaled - no PCell transmissions, such as SRS, PUCCH, and PUSCH, are impaired.

In this disclosure investigation is done on the problem of potential power scaling of cells as result of unaligned uplink transmissions due to multiple Timing Advance values.

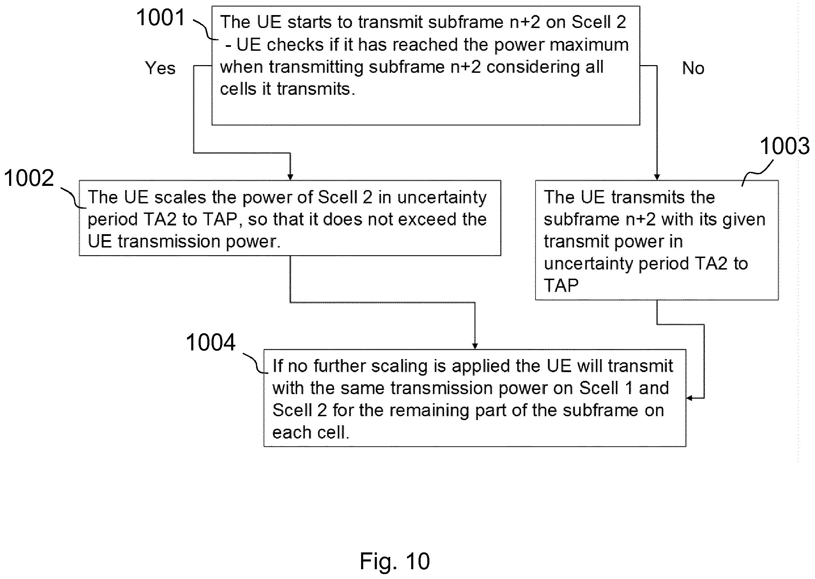

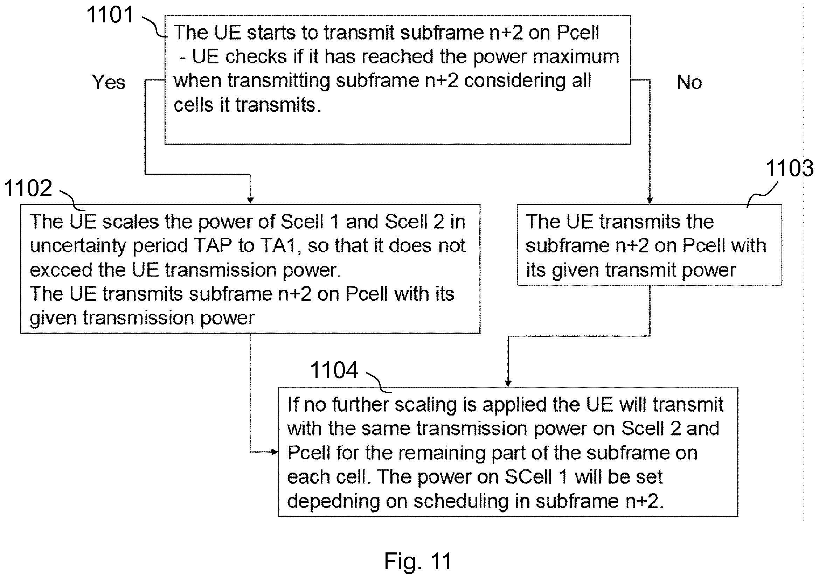

Following is two flowcharts **Figures 10****,****11** illustrating implementation of some of the embodiments. The same procedures/flows may be when slightly modified applicable for other embodiments or embodiments.

**Action 1001.** The user equipment 900 starts to transmit subframe n+2 on Scell 2. The user equipment 900 checks if it has reached the power maximum when transmitting subframe n+2 considering all cell it transmits.

**Action 1002.** If it has reached the power maximum, the user equipment 900 scales the transmit power of SCell 2 in uncertainty period given by TA2 and TAP, so that it does not exceed the user equipment transmission/transmit power.

**Action 1003.** If it has not reached the power maximum, the user equipment 900 transmits the subframe n+2 with its given transmit power in uncertainty period TA2 to TAP.

**Action 1004.** If no further power scaling is applied the user equipment 900 will transmit with the same transmit power on SCell 1 and SCell 2 for the remaining part of the subframe on each cell.

**Figure 11** discloses some alternative embodiments of the method in user equipment 900.

**Action 1101.** The user equipment 900 starts to transmit subframe n+2 on Pcell - the User equipment 900 checks if it has reached the power maximum when transmitting subframe n+2 considering all cell it transmits.

**Action 1102.** If it has reached the power maximum, the user equipment 900 scales the transmit power of SCell 1 and SCell 2 in uncertainty period given by TAP and TA1, so that it does not exceed the user equipment transmission/transmit power. The user equipment 900 transmits subframe n+2 on PCell with its given transmit power.

**Action 1103.** If it has not reached the power maximum, the user equipment 900 transmits the subframe n+2 on PCell with its given transmit power.

**Action 1104.** If no further power scaling is applied the user equipment 900 will transmit with the same transmit power on SCell 2 and PCell for the remaining part of the subframe on each cell. The power on SCell 1 will be set depending on scheduling in subframe n+2.

Note again that the flowcharts may be applicable to other embodiments than the one disclosed by figure 6 and may therefore when slightly amended to correspond to other figures as well.

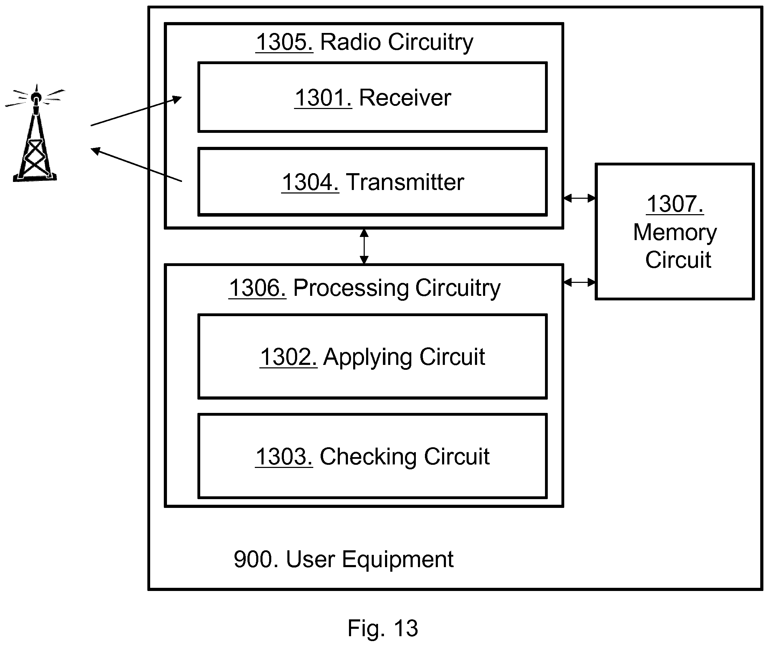

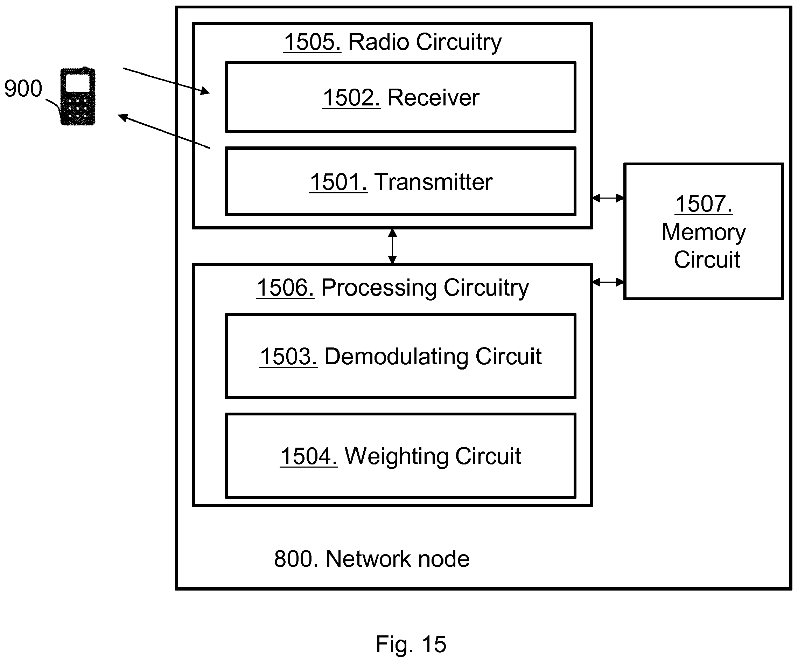

The example network may further include any additional elements suitable to support communication between user equipments 900 or between the user equipment 900 and another communication device, such as a landline telephone. Although the illustrated user equipment 900 may represent communication devices that include any suitable combination of hardware and/or software, these wireless devices may, in particular embodiments, represent devices such as the example user equipment 900 illustrated in greater detail by Figure 13. Similarly, although the illustrated network nodes may represent network nodes that include any suitable combination of hardware and/or software, these network nodes may, in particular embodiments, represent devices such as the example network node 800 illustrated in greater detail by Figure 15.

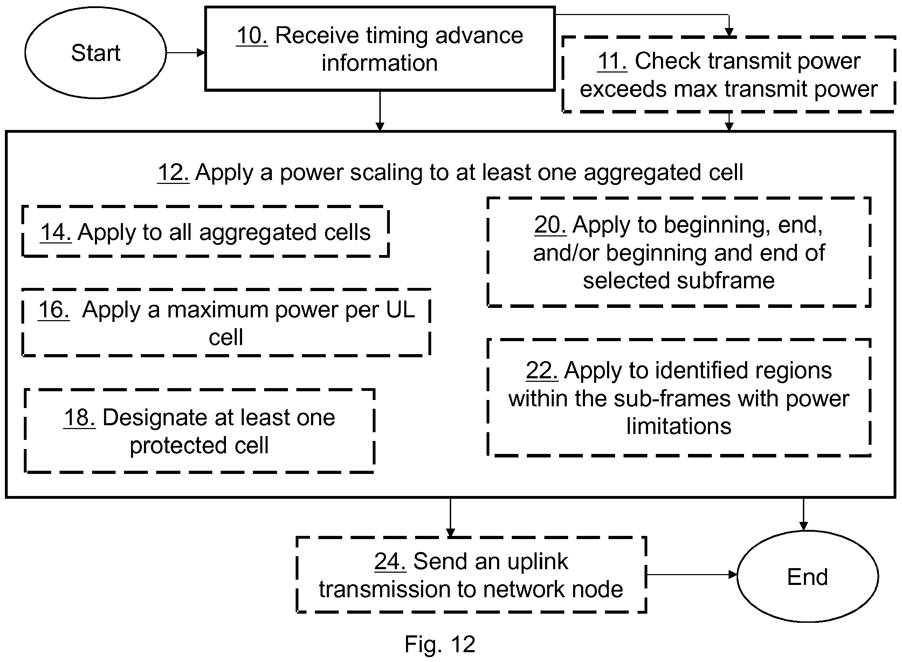

The method actions in the user equipment 900 for applying power scaling to uplink transmissions in a multiple cell communications network according to some general embodiments will now be described with reference to a flowchart depicted in **Figure 12****.** The actions do not have to be taken in the order stated below, but may be taken in any suitable order. Actions performed in some embodiments are marked with dashed boxes. The user equipment 900 is configured to transmit over a plurality of aggregated cells in uplink to a network node 800.

**Action 10.** The user equipment 900 receives from the network node 800, timing advance information for UL for one or more aggregated cells of the plurality of aggregated cells.

**Action 11.** The user equipment 900 may check whether uplink transmissions over cells exceeds transmit power maximum of the user equipment 900 and in that case apply the power scaling.

**Action 12.** The user equipment 900 applies a power scaling to uplink transmissions of at least one aggregated cell out of the plurality of aggregated cells based on the received timing advance information. The at least one aggregated cell is associated with the user equipment 900 and is a cell of the multiple cell communications network. In some embodiments the user equipment applies power scaling for a period of a subframe of the at least one aggregated cell, which period is based on the received timing advance information. A length in time of the period of the subframe may be based on the received timing advance information for one or more aggregated cells.

**Action 14.** The user equipment 900 may apply power scaling to uplink transmissions of all aggregated cells, which are associated with the user equipment 900. In some embodiments the user equipment 900 applies the power scaling by setting the transmit power of at least one aggregated cell to zero. The power scaling may be omitted during uplink transmissions of sounding reference signals.

**Action 16.** The user equipment 900 may, in some embodiments, apply a maximum power per UL cell such that power limitations in transition periods never occur.

**Action 18.** The user equipment 900 may apply the power scaling by designating at least one aggregated cell of the multiple communications cell network as a protected cell and that power scaling is omitted on uplink transmissions of the protected cell. The protected cell may be a primary cell and/or at least one secondary cell. In some embodiments the protected cell is a cell that comprises a sub-frame that occurs first in time relative to subframes of other aggregated cells. In some embodiments the protected cell is a cell that comprises a sub-frame that occurs last in time relative to subframes of other aggregated cells.

**Action 20.** The user equipment 900 may apply the power scaling to a beginning, an end, or the beginning and the end of selected sub-frames of the at least one aggregated cell.

**Action 22.** The user equipment 900 may apply the power scaling to identified regions of sub-frames with power limitations.

**Action 24.** The user equipment 900 may send to the network node 800 one or more uplink transmissions with the applied power scaling.

Thus, some embodiments relate to a method, in a user equipment, for applying power scaling in a multiple cell communications network in presence of multiple uplink timing advancements, each for uplink transmissions in respective cell in the multiple cell communications network. The method comprising: receiving (see action 10), from a base station, timing advancement information for the respective cell; and applying (see action 12) a power scaling to uplink transmissions in at least one cell, associated with the user equipment, of the multiple cell communications network based on the received timing advancement information. The method of example embodiment 1, wherein the applying the power scaling further comprises applying the power scaling to all aggregated cells which are associated with the user equipment. The method of example embodiment 2, wherein the power scaling is applied equally to all aggregated cells. E.g. during a transition period, which transition period is based on the received timing advance information. The method of example embodiment 1, wherein applying the power scaling further comprises applying a maximum power per UL cell such that power limitations in transition periods never occur. The method of example embodiment 1, wherein the applying the power scaling further comprises designating at least one aggregated cell of the multiple communications cell network as a protected cell, such that no power scaling is applied to the protected cell. The applying the power scaling comprises to apply power scaling at a beginning of a subframe of a first cell until a beginning of a second cell. The applying the power scaling may comprise to apply power scaling at an end of a subframe of a first cell until an end of a second cell. The applying a power scaling over the whole subframe comprises reducing transmit power of at least one aggregated cell over the whole subframe taking transmit power of the different aggregated cells into account relative a maximum, also called Release-10 scaling. The method of example embodiment 5, wherein the protected cell is a primary cell and/or at least one secondary cell. The method of any of examples embodiments 5 or 6, wherein the protected cell is a cell which comprises a sub-frame that occurs first in time. The method of any of example embodiments 5-6, wherein the protected cell is a cell which comprises a sub-frame that occurs last in time. The method of any of example embodiments 1-8, wherein the applying the power scaling further comprises applying the power scaling to a beginning, end, and/or beginning and end of selected sub-frames of the at least one aggregated cells. The method of any of example embodiments 1-9, wherein the applying the power scaling further comprises applying the power scaling to identified regions of sub-frames with power limitations. The method of any of example embodiments 1-10, further comprising sending, to a base station, an uplink transmission.

**Figure 13** is a block diagram depicting a user equipment according to some embodiments herein for applying power scaling to uplink transmissions in a multiple cell communications network. The user equipment 900 is configured to transmit over a plurality of aggregated cells in uplink to a network node 800.

The user equipment 900 comprises **a receiver 1301** configured to receive, from the network node 800, timing advance information for UL for one or more aggregated cells of the plurality of aggregated cells.

The user equipment 900 further comprises **an applying circuit 1302** configured to apply a power scaling to uplink transmissions of at least one aggregated cell out of the plurality of aggregated cells based on the received timing advance information. The at least one aggregated cell is associated with the user equipment 900 and is a cell of the multiple cell communications network.

In some embodiments, the applying circuit 1302 is configured to apply the power scaling for a period of a subframe of the at least one aggregated cell. The period is based on the received timing advance information. A length in time of the period of the subframe may be based on the received timing advance information for one or more aggregated cells.

In some embodiments, the applying circuit 1302 is configured to apply power scaling to uplink transmissions of all aggregated cells. The aggregated cells are associated with the user equipment 900. The applying circuit 1302 may be configured to set the transmit power of at least one aggregated cell to zero. The applying circuit 1302 may be configured to omit power scaling during uplink transmissions of sounding reference signals. The applying circuit 1302 may be configured to designate at least one aggregated cell of the multiple communications cell network as a protected cell. The applying circuit may further be configured to omit power scaling on uplink transmissions of the protected cell. The protected cell may be a primary cell and/or at least one secondary cell. The protected cell may be a cell that comprises a sub-frame that occurs first in time relative to subframes of other aggregated cells. In some embodiments, the protected cell may be a cell that comprises a sub-frame that occurs last in time relative to subframes of other aggregated cells.

The applying circuit 1302 may further be configured to apply the power scaling to a beginning, an end, or the beginning and the end of selected sub-frames of the at least one aggregated cell. The applying circuit 1302 may additionally be configured to apply the power scaling to identified regions of sub-frames with power limitations.

The user equipment 900 may also comprise **a checking circuit 1303** configured to check whether uplink transmissions over cells exceeds maximum transmit power of the user equipment 900. In that case, the applying circuit 1302 is configured to perform the power scaling.

T the user equipment 900 further comprises **a transmitter 1304** that may be configured to send to the network node 800 one or more uplink transmissions with the applied power scaling.

The receiver 1301 and the transmitter 1304 may be comprised in **a radio circuit 1305** in the user equipment 900. The applying circuit 1302 and/or the checking circuit 1303 may be part of **a processing circuit 1306.**

As shown in Figure 13, the user equipment 900 or wireless device above comprises the processing circuitry 1306, **a memory 1307,** the radio circuitry 1305, and at least one antenna. The radio circuitry 1305 may comprise RF circuitry and baseband processing circuitry (not shown) which may be used to configure the user equipment 900 (UE) according to one or more of the herein disclosed embodiments or embodiments. In particular embodiments, some or all of the functionality described above as being provided by mobile communication devices or other forms of wireless device may be provided by the processing circuitry 1306 executing instructions stored on a computer-readable medium, such as the memory 1307 shown in Figure 13. Alternative embodiments of the user equipment 900 may include additional components beyond those shown in Figure 13 that may be responsible for providing certain aspects of the user equipment's functionality, including any of the functionality described above and/or any functionality necessary to support the embodiment described above. The circuitries mentioned above may be used (any of them that is or in any combination) to execute one or more of the earlier mentioned embodiments, embodiment 1-5, and/or embodiments 1-5. The circuitries may also perform or include means for executing a embodiment according to the earlier disclosed flowcharts. All these circuitries may be comprised in a UE of an LTE system as earlier mentioned.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

Thus, embodiments herein relate to a user equipment for power scaling in a presence of a multiple UL timing advancement in a multiple cell communications network. The user equipment comprises a radio circuitry 1305 configured to receive, from a network node 800, timing advancement information. The user equipment further comprises a processing circuitry 1306 configured to apply a power scaling to at least one aggregated cell, associated with the user equipment, of the multiple cell communications network based on the received timing advancement information. The user equipment of example embodiment 15, wherein the processing circuitry 1306 is further configured to apply the power scaling to all aggregated cells which are associated with the user equipment. The user equipment of example embodiment 16, wherein the power scaling is applied equally to all aggregated cells. The user equipment of example embodiment 15, wherein the processing circuitry 1306 is further configured to apply a maximum power per UL cell such that power limitations in transition periods never occur. The user equipment of example embodiment 15, wherein the processing circuitry 1306 is further configured to designate at least one aggregated cell of the multiple communications cell network as a protected cell, such that no power scaling is applied to the protected cell. The user equipment of example embodiment 19, wherein the protected cell is a primary cell and/or at least one secondary cell. The user equipment of any of examples embodiments 19 or 20, wherein the protected cell is a cell which comprises a sub-frame that occurs first in time. The user equipment of any of example embodiments 19 or 20, wherein the protected cell is a cell which comprises a sub-frame that occurs last in time. The user equipment of any of example embodiments 15-22, wherein the processing circuitry 1306 is further configured to apply the power scaling to a beginning, end, and/or beginning and end of selected sub-frames of the at least one aggregated cells. The user equipment of any of example embodiments 15-23, wherein the processing circuitry 1306 is further configured to apply the power scaling to identified regions of sub-frames with power limitations. The user equipment of any of example embodiments 15-24, wherein the radio circuitry 1305 is further configured to send, to a base station, an uplink transmission.

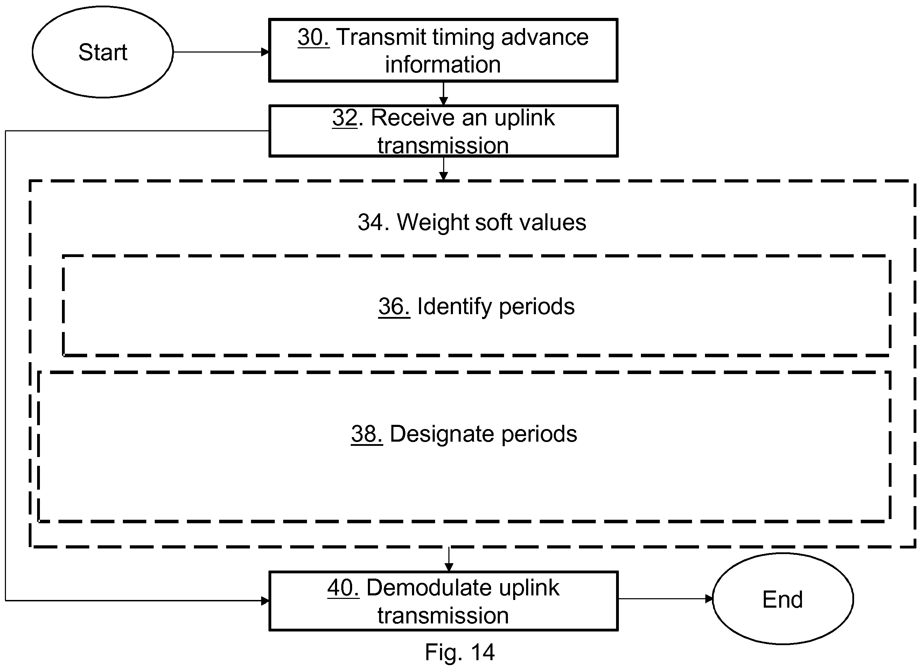

The method actions in the network node 800 for demodulating uplink transmissions from the user equipment 900 in a multiple cell communications network according to some general embodiments will now be described with reference to a flowchart depicted in **Figure 14****.** The steps do not have to be taken in the order stated below, but may be taken in any suitable order. The network node is configured to receive over a plurality of aggregated cells uplink transmissions from the user equipment 900.

**Action 30.** The network node 800 transmits, to the user equipment 900, determined timing advance information for UL of one or more aggregated cells of the plurality of aggregated cells.

**Action 32.** The network node 800 receives, from the user equipment 900, an uplink transmission of at least one aggregated cell out of the plurality of aggregated cells.

**Action 34.** The network node 800 may weight soft values resulting in the weighted soft values for the periods. The network node 800 may set the soft values to zero. E.g. weight soft values in uncertainty periods in the received uplink transmission based on the transmitted timing advance information.

**Action 36.** The network node 800 may weight by identifying the periods in the received uplink transmission. The network node 800 may identify the periods is based on determined timing advance information or detected uplink energy levels. Identify periods of increased power reduction, i.e. scaling, of the uplink transmission or Identify periods of less power reduction, i.e. scaling, in the received uplink transmission.

**Action 38.** The network node 800 may weight by identifying soft values of bits associated with said periods of power scaling with a smaller or larger weighting factors during the demodulating of said received uplink transmission. E.g. provide soft values of bits associated with said periods a greater degree of trustworthiness, weighting soft values with larger numbers. The network node 800 may designate soft values of bits associated with said periods with a lower degree of trustworthiness, e.g. weighting with smaller numbers, during a decoding of the received uplink transmission.

**Action 40.** The network node 800 demodulates the received uplink transmission using weighted soft values in periods in the received uplink transmission, which periods are based on the transmitted timing advance information.

Thus, embodiments relate to a method, in a base station, for demodulating uplink transmissions in a presence of multiple UL timing advancement in a multiple cell communications network. The method comprising: transmitting, to a user equipment, timing advancement information; receiving, from a user equipment, an uplink transmission; and weighting soft values in uncertainty periods in the received uplink transmission based on the transmitted timing advancement information. The method of example embodiment, wherein the weighting further comprises: identifying portions or periods of increased power reduction (scaling) in the received uplink transmission; and designating soft values of bits associated with said portions/periods with a lower degree of trustworthiness (weighting soft values with smaller numbers) during a decoding of said received uplink transmission. The method of any of example embodiments, wherein the weighting of soft values further comprises identifying portions/periods of less power reduction (scaling) in the received uplink transmission; and providing soft values of bits associated with said portions/periods of less power scaling a greater degree of trustworthiness, weighting soft values with larger numbers.

**Figure 15** is a block diagram depicting a network node 800 according to some embodiments herein for demodulating uplink transmissions from the user equipment 900 in the multiple cell communications network. The network node 800 is configured to receive over a plurality of aggregated cells uplink transmissions from the user equipment 900.

The network node 800 comprises **a transmitter 1501** configured to transmit, to the user equipment 900, determined timing advance information for UL of one or more aggregated cells of the plurality of aggregated cells.

The network node 800 further comprises **a receiver 1502** configured to receive, from the user equipment 900, an uplink transmission of at least one aggregated cell out of the plurality of aggregated cells.

The network node 800 additionally comprises **a demodulating circuit 1503** configured to demodulate the received uplink transmission using weighted soft values in periods in the received uplink transmission. The periods are based on the transmitted timing advance information.

The network node 800 may in some embodiments further comprise **a weighting circuit 1504** configured to weight soft values resulting in the weighted soft values for the periods. The weighting circuit 1504 may be configured to set the soft values to zero. In some embodiments the weighting circuit 1504 is configured to identify the periods in the received uplink transmission. The weighting circuit 1504 is then further configured to provide soft values of bits associated with said periods of power scaling with smaller or larger weighting factors to the demodulating circuit 1503 of said received uplink transmission.

In some embodiments the weighting circuit 1504 is configured to identify the periods based on determined timing advance information or detected uplink energy levels.

Thus, embodiments herein relate to the network node 800, e.g. a base station, for demodulating uplink transmissions in a presence of multiple UL timing advancement in a multiple cell communications network. The network node 800 may comprise **a radio circuitry 1505** configured to send, to the user equipment 900, timing advancement information. The radio circuitry 1505 may further be configured to receive, from the user equipment 900, an uplink transmission. The network node 800 may further comprise **a processing circuitry 1506** configured to weight soft values in uncertainty periods in the received uplink transmission based on the transmitted timing advancement information. In some embodiments the processing circuitry 1506 is further configured to identify portions of increased power reduction, scaling, in the received uplink transmission. The processing circuitry 1506 may further be configured to designate soft values of bits associated with said portions with a lower degree of trustworthiness (weighting soft values with smaller numbers) during a decoding of said received uplink transmission.

The processing circuitry 1506 may further be configured to identify portions of less power reduction or scaling in the received uplink transmission. The processing circuitry 1506 may also be configured to provide soft values of bits associated with said portions of less power scaling a greater degree of trustworthiness, weighting soft values with larger numbers.

The network node 800 further comprises **a memory 1507** that may comprise one or more memory units and may be used to store for example data such as threshold values, quality values, user equipment context, timers, cyphering keys, application to perform the methods herein when being executed on the network node 800 or similar.

## Claims

1. A method, in a network node (800), for demodulating uplink transmissions from a user equipment (900) in a multiple cell communications network, which network node (800) is configured to receive over a plurality of aggregated cells uplink transmissions from the user equipment (900), the method comprising:
- *transmitting* (30), to the user equipment (900), determined timing advance information for uplink of one or more aggregated cells out of the plurality of aggregated cells;
- *receiving* (32), from the user equipment (900), an uplink transmission of at least one aggregated cell out of the plurality of aggregated cells; and
- *demodulating* (40,506) the received uplink transmission using weighted soft values in periods of subframes in the received uplink transmission, which periods are based on the transmitted timing advance information.

2. A method according to claim 1, further comprising
- *weighting* (34) soft values resulting in the weighted soft values for the periods.

3. A method according to claim 2, wherein *weighting* (34) comprises to set the soft values to zero.

4. A method according to any of the claims 1-3, wherein the *weighting* (34) further comprises:
- *identifying* (36) the periods in the received uplink transmission; and
- *providing* (38) soft values of bits associated with periods of power scaling of uplink transmissions by the user equipment with smaller or larger weighting factors during the *demodulating* (40) of said received uplink transmission.

5. A method according to claim 4, wherein the *identifying* (36) the periods is based on determined timing advance information or detected uplink energy levels.

6. A network node (800), for demodulating uplink transmissions from a user equipment (900) in a multiple cell communications network, which network node (800) is configured to receive over a plurality of aggregated cells uplink transmissions from the user equipment (900), wherein the network node (800) comprises:
a transmitter (1501) configured to transmit, to the user equipment (900), determined timing advance information for uplink of one or more aggregated cells of the plurality of aggregated cells;
a receiver (1502) configured to receive, from the user equipment (900), an uplink transmission of at least one aggregated cell out of the plurality of aggregated cells; and
a demodulating circuit (1503) configured to demodulate the received uplink transmission using weighted soft values in periods of a subframe in the received uplink transmission, which periods are based on the transmitted timing advance information.

7. A network node (800) according to claim 6, further comprising a weighting circuit (1504) configured to weight soft values resulting in the weighted soft values for the periods.

8. A network node (800) according to claim 7, wherein the weighting circuit (1504) is configurable to set the soft values to zero.

9. A network node (800) according to any of the claims 6-8, wherein the weighting circuit (1504) is configured to identify the periods in the received uplink transmission; and to provide soft values of bits associated with periods of power scaling of uplink transmissions by the user equipment with smaller or larger weighting factors to the demodulating circuit (1503) of said received uplink transmission.

10. A network node (800) according to claim 9, wherein the weighting circuit (1504) is configured to identify the periods based on determined timing advance information or detected uplink energy levels.

## Patentansprüche

1. Verfahren in einem Netzwerkknoten (800) zum Demodulieren von Aufwärtsübertragungen von einer Benutzerausrüstung (900) in einem mehrzelligen Kommunikationsnetzwerk, wobei der Netzwerkknoten (800) konfiguriert ist, Aufwärtsübertragungen von der Benutzerausrüstung (900) über eine Vielzahl von aggregierten Zellen zu empfangen, das Verfahren umfassend:
- *Übertragen* (30), zur Benutzerausrüstung (900), vorgegebener Zeitplanungsvorabinformationen für eine Aufwärtsstrecke einer oder mehrerer aggregierter Zellen aus der Vielzahl von aggregierten Zellen;
- *Empfangen* (32), von der Benutzerausrüstung (900), einer Aufwärtsübertragung zumindest einer aggregierten Zelle aus der Vielzahl von aggregierten Zellen; und
- *Demodulieren* (40, 506) der empfangenen Aufwärtsübertragung unter Verwendung gewichteter weicher Werte in Perioden von Teilrahmen in der empfangenen Aufwärtsübertragung, wobei die Perioden auf den übertragenen Zeitplanungsvorabinformationen beruhen.

2. Verfahren nach Anspruch 1, weiter umfassend
- *Gewichten* (34) von weichen Werten, wodurch gewichtete weiche Werte für die Perioden erhalten werden.

3. Verfahren nach Anspruch 2, wobei das *Gewichten* (34) ein Einstellen der weichen Werte auf null umfasst.

4. Verfahren nach einem der Ansprüche 1 - 3, wobei das *Gewichten* (34) weiter umfasst:
- *Identifizieren* (36) der Perioden in der empfangenen Aufwärtsübertragung; und
- *Bereitstellen* (38) von weichen Werten von Bits, die mit Perioden einer Energieskalierung von Aufwärtsübertragungen durch die Benutzerausrüstung (900) verknüpft sind, mit kleineren oder größeren Gewichtungsfaktoren während des *Demodulierens* (40) der empfangenen Aufwärtsübertragung.

5. Verfahren nach Anspruch 4, wobei das *Identifizieren* (36) der Perioden auf bestimmten Zeitplanungsvorabinformationen oder erfassten Aufwärtsenergieniveaus beruht.

6. Netzwerkknoten (800) zum Demodulieren von Aufwärtsübertragungen von einer Benutzerausrüstung (900) in einem mehrzelligen Kommunikationsnetzwerk, wobei der Netzwerkknoten (800) konfiguriert ist, Aufwärtsübertragungen von der Benutzerausrüstung (900) über eine Vielzahl von aggregierten Zellen zu empfangen, wobei der Netzwerkknoten (800) umfasst:
einen Sender (1501), der zum Übertragen, zur Benutzerausrüstung (900), vorgegebener Zeitplanungsvorabinformationen für eine Aufwärtsstrecke einer oder mehrerer aggregierter Zellen aus der Vielzahl von aggregierten Zellen konfiguriert ist;
einen Empfänger (1502), der zum Empfangen, von der Benutzerausrüstung (900), einer Aufwärtsübertragung zumindest einer aggregierten Zelle aus der Vielzahl von aggregierten Zellen konfiguriert ist; und
eine Demodulationsschaltung (1503), die zum Demodulieren der empfangenen Aufwärtsübertragung unter Verwendung gewichteter weicher Werte in Perioden von Teilrahmen in der empfangenen Aufwärtsübertragung konfiguriert ist, wobei die Perioden auf den übertragenen Zeitplanungsvorabinformationen beruhen.

7. Netzwerkknoten (800) nach Anspruch 6, weiter umfassend
eine Gewichtungsschaltung (1504), die zum Gewichten von weichen Werten konfiguriert ist, wodurch gewichtete weiche Werte für die Perioden erhalten werden.

8. Netzwerkknoten (800) nach Anspruch 7, wobei die Gewichtungsschaltung (1504) konfigurierbar ist, die weichen Werte auf null zu stellen.

9. Netzwerkknoten (800) nach einem der Ansprüche 6 - 8, wobei die Gewichtungsschaltung (1504) konfiguriert ist, die Perioden in der empfangenen Aufwärtsübertragung zu identifizieren; und der Demodulationsschaltung (1503) der empfangenen Aufwärtsübertragung weiche Werte von Bits, die mit Perioden einer Energieskalierung von Aufwärtsübertragungen durch die Benutzerausrüstung verknüpft sind, mit kleineren oder größeren Gewichtungsfaktoren bereitzustellen.

10. Netzwerkknoten (800) nach Anspruch 9, wobei die Gewichtungsschaltung (1504) konfiguriert ist, Perioden auf bestimmten Zeitplanungsvorabinformationen oder erfassten Aufwärtsenergieniveaus beruhend zu identifizieren.

## Revendications

1. Procédé dans un noeud de réseau (800) pour démoduler des transmissions en voie montante depuis un équipement d'utilisateur (900) dans un réseau de communications à cellules multiples, lequel noeud de réseau (800) est configuré pour recevoir via une pluralité de cellules regroupées des transmissions en voie montante de l'équipement d'utilisateur (900), le procédé comprenant :
- la *transmission* (30) à l'équipement d'utilisateur (900) d'informations d'avance temporelle déterminées pour la voie montante d'une ou plusieurs cellules regroupées parmi la pluralité de cellules regroupées,
- la *réception* (32) de l'équipement d'utilisateur (900) d'une transmission en voie montante d'au moins une cellule regroupée parmi la pluralité de cellules regroupées ; et
- la *démodulation* (40, 506) de la transmission en voie montante reçue en utilisant des valeurs uniformes pondérées dans des périodes de sous-trames dans la transmission en voie montante reçue, lesquelles périodes sont basées sur les informations d'avance temporelle transmises.

2. Procédé selon la revendication 1, comprenant en outre :
- la *pondération* (34) de valeurs uniformes pour obtenir les valeurs uniformes pondérées pour les périodes.

3. Procédé selon la revendication 2, dans lequel la *pondération* (34) comprend le réglage des valeurs uniformes à zéro.

4. Procédé selon l'une quelconque des revendications 1 à 3, dans lequel la *pondération* (34) comprend en outre :
- l'*identification* (36) des périodes dans la transmission en voie montante reçue ; et
- la *fourniture* (38) de valeurs uniformes de bits associées à des périodes de cadrage de puissance de transmissions en voie montante par l'équipement utilisateur avec des facteurs de pondération plus petits ou plus grand au cours de la *démodulation* (40) de ladite transmission en voie montante reçue.

5. Procédé selon la revendication 4, dans lequel l'*identification* (36) des périodes est basée sur des informations d'avance temporelle déterminées ou des niveaux d'énergie en voie montante détectés.

6. Noeud de réseau (800) pour démoduler des transmissions en voie montante depuis un équipement d'utilisateur (900) pour recevoir via une pluralité de cellules regroupées des transmissions en voie montante de l'équipement d'utilisateur (900), dans lequel le noeud de réseau (800) comprend :
un émetteur (1501) configuré pour transmettre à l'équipement d'utilisateur (900) des informations d'avance temporelle déterminées pour la voie montante d'une ou plusieurs cellules regroupées de la pluralité de cellules regroupées ;
un récepteur (1502) configuré pour recevoir de l'équipement d'utilisateur (900) une transmission en voie montante d'au moins une cellule regroupée parmi la pluralité de cellules regroupées ; et
un circuit de démodulation (1503) configuré pour démoduler la transmission en voie montante reçue en utilisant des valeurs uniformes pondérées dans des périodes d'une sous-trame dans la transmission en voie montante reçue, lesquelles périodes sont basées sur les informations d'avance temporelle transmises.

7. Noeud de réseau (800) selon la revendication 6, comprenant en outre :
un circuit de pondération (1504) configuré pour pondérer des valeurs uniformes pour obtenir les valeurs uniformes pondérées pour les périodes.

8. Noeud de réseau (800) selon la revendication 7, dans lequel le circuit de pondération (1504) est configurable pour régler les valeurs uniformes à zéro.

9. Noeud de réseau (800) selon l'une quelconque des revendications 6 à 8, dans lequel le circuit de pondération (1504) est configuré pour identifier les périodes dans la transmission en voie montante reçue et fournir des valeurs uniformes de bits associées à des périodes de cadrage de puissance de transmissions en voie montante par l'équipement utilisateur avec des facteurs de pondération plus petits ou plus grands au circuit de démodulation (1503) de ladite transmission en voie montante reçue.

10. Noeud de réseau (800) selon la revendication 9, dans lequel le circuit de pondération (1504) est configuré pour identifier les périodes sur la base d'informations d'avance temporelle déterminées ou de niveaux d'énergie en voie montante détectés.
